# EUROPEAN PATENT APPLICATION

(11) **EP 1 411 527 A1**
(43) Date of publication of application: **21.04.2004**
(21) Application number: 02023175.9
(22) Date of filing: 16.10.2002
(51) Int. Cl.: G12B 21/00, G12B 21/22

(54) **Carrier device and sample holder system for use under ultra high vacuum**

(71) Applicant: Carl von Ossietzky Universität Oldenburg, 26129 Oldenburg (DE)
(72) Inventor: Winkler, Alexander, 26131 Oldenburg (DE); Leist, Ulrich, 26133 Oldenburg (DE)
(74) Representative: Eisenführ, Speiser & Partner

(57) **Abstract**

Described is a carrier device for use under UHV conditions and for carrying a sample or a sample holding element, the device comprising a mounting base with a number of mounting holes, the holes being electrically insulated against each other, such that electrically conducting mounting elements when inserted into the holes are not in electric contact with each other via the mounting base, and one or more sapphire spacers for conducting heat from a sample to a cooling element, and being attached to the mounting base.

## Description

The present invention primarily concerns a carrier device for use under UHV conditions and for carrying a sample to be prepared and/or analysed or a sample holding element. The invention further concerns an unassembled or assembled modular sample holder system for use under ultra high vacuum (UHV) conditions, the use of a carrier device according to the invention in a method for preparation and/or analysis of a sample under UHV conditions and methods for preparation and/or analysis of a sample under UHV conditions.

The techniques employed in modern surface science to prepare and analyse samples in high and ultra high vacuum (UHV) conditions are numerous. To acquire as many information as possible about the sample investigated the necessity arises to utilize a large number of analyzing techniques, like LEED, TPD, STM, XPS, IR and so forth.

Generally, due to geometrical problems it is very difficult to arrange all these methods in just one UHV chamber without having to transfer the sample in some way. Furthermore it has to be taken into account that the sample usually needs to be prepared via sputter cleaning or thin film deposition, for example. To avoid contamination of the analysis chamber these pretreatment procedures are normally carried through in a separate UHV chamber. A standard manipulator only allows x, y and z motion as well as rotation of the sample but in case of more complex UHV systems as described above, a transfer system of some sort is required. Basically two strategies exist. One involves a sample in its holder (carrier device) being carried between adjacent and isolatable UHV chambers via a transfer arm equipped with a suitable receptacle, see X.-S. Wang, C. Huang, V. Bressler-Hill, R. Maboudian, and W. H. Weinberg, J. Vac. Sci. Technol. A 11, 2860 (1993) as well as T. Fleisch, A. T. Shephard, T. Y. Ridley, W. E. Vaughn, N. Winograd, W. E. Baitinger, G. L. Ott, and W. N. Delgass, J. Vac. Sci. Technol. 15, 1756 (1978). The second option would be to transfer the holder (carrier device) with the sample between two separate UHV chambers employing a third UHV systems as a carrier, see J. P. Hobson, and E. V. Kornelsen, J. Vac. Sci. Technol. 16, 701 (1979), F. Osaka, T. Ishikawa, N. Tanaka, M. Lopez, and I. Matsuyama, J. Vac. Sci Technol. B 12, 2849 (1994).

In any case, though, a mobile carrier device with the sample being attached to it has to be utilized.

The design of the carrier device is crucial to the effect that it determines its application. It is desirable, for example, that the ability of heating, cooling and temperature measurement would still be available at different stations after the sample has been transferred from one station to another.

A commercially available system, in which the heating option is implemented in the docking station is offered by Omicron NanoTechnology GmbH, Limburger Str. 75, D-65232 Taunusstein, Germany.

Mendus and Chambers (T. Mendus, and A. Chambers, L. Vac. Sci. Technol. B 16, 1258 (1998)) describe a docking station for a standard Omicron sample plate which allows heating of the sample via resistance heating and electron bombardment heating.

In a concept described by Nafisi *et al*. (K. Nafisi, W. Ranau, and J. C. Hemminger, Rev. Sci. Instrum. 72, 157 (2001)) a heating filament is integrated directly into a sample holder, but the mobility of the sample holder is limited due to the cables attached to it.

Aristov and lonov (V. Y. Aristov, and A. M. lonov, Cryogenics 34, 285 (1994)) developed a cryomanipulator, cooled by liquid helium, which furthermore functions as a docking station for a mobile sample holder. Electrical plug-and-socket connectors mounted on the cryoinsert as well as on the mobile sample holder allow electrical measurements like temperature measurements via a carbon resistor-thermometer and still retain the mobility of the sample holder (carrier device). This design does not include a heating option for higher temperatures, though.

A sample holder system described by Raval *et al*. (R. Raval, M. A. Harrison, and D. A. King, J. Vac. Sci. Technol. A 9, 345 (1991)) employs a bayonet locking mechanism to lock a mobile sample holder (carrier device) either onto a fixed sample holder receptacle on a xyzθ manipulator or onto the receptacle on a magnetic transfer rod. The design of the system provides temperature control as well as cooling and direct heating of the sample. All the options are still available after the sample has been transferred between sample holder receptacles on different manipulators. This system does however not include a heating filament, though, therefore resistance heating and electron bombardment heating are not available.

A key requirement a mobile sample holder system should favorably fulfill is flexibility with respect to different analyzing methods. The sample holder should favourably allow the sample to be freely accessible even at glancing angles. This is not only important for different kinds of beams as used in different analyzing methods. Especially methods which require the sample to be close to a device, like in the case of a scanning tunneling microscopy (STM), can sometimes pose a problem. The sample holder system developed by Omicron was specially designed to match up with the company's own STMs. The sample holder introduced by Mendus and Chambers, supra, is based on a modified Omicron STM sample plate and can therefore be also incorporated into a STM. The system developed by Nafisi *et al*., supra, was specially designed for a beetle-type STM.

The present invention is primarily concerned with the design of a new and modular sample holder system providing a high degree of flexibility. The system's most important element (module) is a mobile carrier device (hereinafter also: mobile sample holder) for use under UHV conditions for carrying a sample or a sample holding element, the device comprising
- a mounting base (hereinafter also: ground plate) with a number of mounting holes, the holes being electrically insulated against each other, such that electrically conducting mounting elements when inserted into the holes are not in electric contact with each other via the mounting base, and
- one or more sapphire spacers for conducting heat from a sample to a cooling element, and being attached to the mounting base.

A further element of the modular sample holder system of the present invention is a sample holding element (hereinafter also: sample plate) (a) adapted to hold or holding a sample to be prepared and/or analysed under UHV conditions and (b) adapted to be fastened or being fastened to the carrier device.

Of course, the modular sample holder system of the present invention has to be compatible with a corresponding docking station (which regularly comprises means for cooling a sample held by the sample holder system of the invention).

The present invention is based on the strategic concept to provide a modular construction system which allows for the assembly of numerous different UHV sample holder setups on a standardized mounting base, starting from a limited set of components which can be used over and over again.

Preferred carrier devices of the present invention have the mounting holes arranged in a regular array.

A regular array of mounting holes facilitates the design of corresponding elements to be mounted on the mounting base. Generally, elements to be mounted on the mounting base of the carrier device of the present invention will be mounted by means of bolts or screws extending through (a) the element to be mounted and (b) one or more of the mounting holes in the mounting base. As many of the elements typically used for the preparation and/or analysis of a sample under UHV conditions need to be fastened by more than one bolt or screw in order to guarantee a precise adjustment relative to other elements, these elements will typically possess more than one complementary mounting element for alignment with the corresponding number of mounting holes in the mounting base. Preferably, more than one set of two mounting holes in the mounting base possesses the same distance from hole to hole so that elements to be mounted on the mounting base can be aligned with different sets of two mounting holes.

Preferably, the carrier device of the present invention further comprises one or more fastening elements for removably fastening a sample holding element to the carrier device, the fastening element(s) being directly or indirectly attached to the sapphire spacer(s) opposite the mounting base.

Alternatively however, in very simple designs, the carrier device is arranged to directly hold a sample to be prepared and/or analysed.

For experiments under UHV conditions in many cases a sample has to be heated. Thus, a preferred carrier device of the present invention comprises a heating element for heating a sample to be mounted on the carrier device and preferably to be held by a sample holding element fastened by one or more fastening elements (if appropriate). The heating element in some cases comprises a heating filament as is illustrated herein below with respect to a preferred embodiment. However, other designs of heating elements can be used likewise. Of course, the heating element is favourably detachably mounted or mountable to the mounting base by means of the mounting holes.

Accordingly, the carrier device of the present invention preferably comprises a number of mounting elements extending through a corresponding number of mounting holes in the mounting base and (preferably removably) mounting to the mounting base at least one sapphire spacer and/or at least one heating element and/or at least one other element of the carrier device.

Naturally, it is preferred that all elements mounted on the mounting base are removably mounted so that the mounting base and its mounting holes can be used over and over again for assembling different set ups needed to cope with different experimental situations.

For the preparation and/or analysis of samples under UHV conditions in many cases the sample has to be contacted with electric conductors. In other cases thermo couples comprising metallic wires have to be brought into close proximity to the sample. In still other cases an electric heating element has to be arranged close to the sample or other elements have to be contacted with or have to be brought into proximity to the sample which need an electric contact with some kind of electric device distant from the carrier device. Therefore, the carrier device of the present invention preferably comprises a contact ledge having a series of separate electric contact elements for contacting external electric conductors. These electric contact elements on the contact ledge are preferably electrically connected to electric lines arranged to provide electric contact to the sample and/or a sample holding element and/or a heating element when the respective element/s is/are attached to the carrier device.

It is to be noted that providing a contact ledge having a series of separate electric contact elements implies that the docking station(s) in a UHV system possess a series of mating separate electric contact elements to provide electric contact.

In order to facilitate a transfer of a carrier device of the present invention from a first UHV chamber to a second UHV chamber the carrier device typically possesses a first coupling element distant from the mounting holes which is designed for (in particular mechanical) coupling with the corresponding second coupling element of a transfer mechanism.

In some embodiments of the present invention fastening element(s) are arranged adjacent to one or more contact plates directly or indirectly attached to the sapphire spacer(s) opposite the mounting base, the contact plate(s) being arranged to directly or indirectly provide electric contact with a sample holding element to be fastened by the fastening element(s). A particular design comprising contact plates is described herein below.

The mounting base of the carrier device of the present invention preferably is a good heat conductor at low temperatures as it generally has to act as a cold bridge between the cooling element of a UHV docking station and a sapphire spacer (which itself is an excellent heat conductor at low temperatures). For cost reasons in many cases a mounting base will be made of a metal like cooper. Similarly, mounting elements extending through mounting holes in the mounting base and mounting thereto certain elements of the carrier device will in many cases be fabricated from a metallic material. If this is the case, the mounting elements are preferably electrically insulated against each other in order to avoid any short cuts or the like. Preferably, if the mounting base is of an electrically conducting material it comprises electrically insulating sleeves embedded in the mounting base and providing mounting holes which are electrically insulated against each other. The mounting elements used for assembly of the experimental set up are then inserted into the mounting holes defined by the insulating sleeves so that no further insulation is needed. A preferred embodiment comprising this insulation technique is described herein below.

A particularly preferred embodiment of a carrier device of the present invention comprises means for azimuthaly rotating a sample holding element or a sample on the carrier device.

Further preferred embodiments of the present invention are described herein below with reference to the accompanying drawings in which:
- Fig. 1a - d: show a carrier device (sample holder) according to the present invention. In Fig. 1 a all dimensions are in millimeter;
- Fig. 2a - c: show a docking station consisting of a sample holder stage (Fig. 2a), runners for sample holder (Fig. 2b) and contact ledge (Fig. 2b), as well as the approach of a sample holder (Fig. 2c).
- Fig. 3a - d: shows the sample holder of Fig. 1 in the docking station of Fig. 2. Fig. 3a shows the set up without sample plate; Fig. 3b shows the approach of a sample plate; Fig. 3c shows the complete assembly consisting of sample plate with sample, sample holder and docking station; Fig. 3d shows sample plate (sample holding element) with sample in detail.

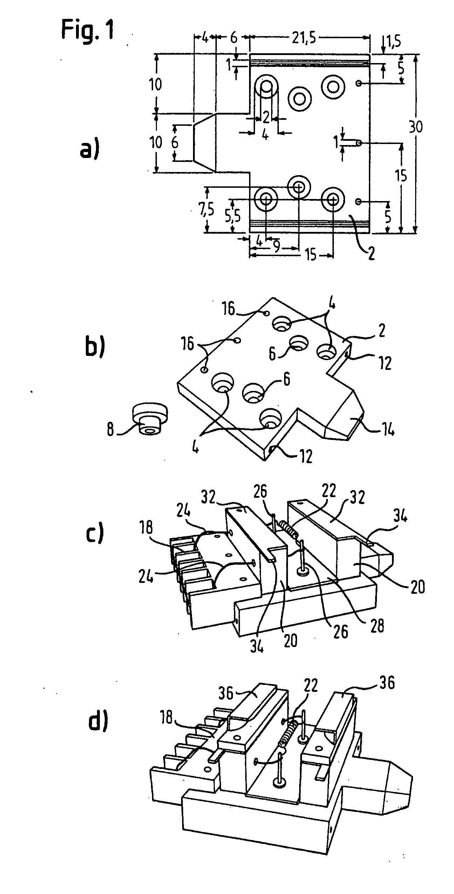

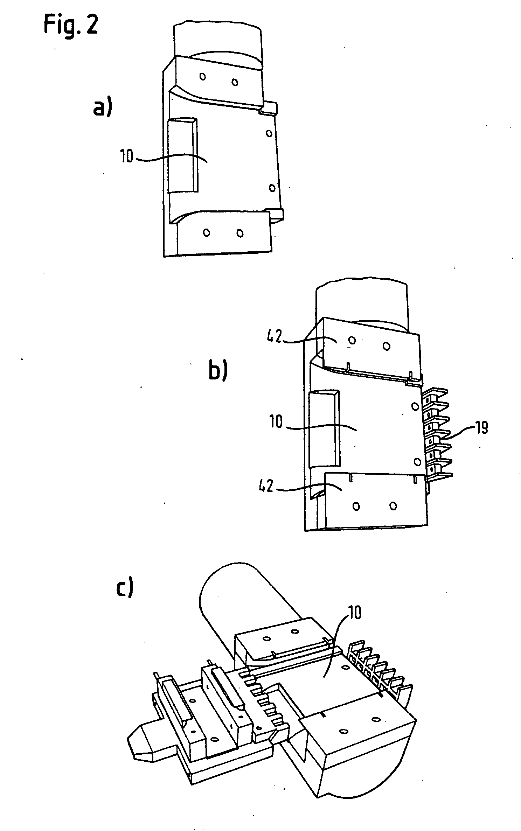

The basic element of the carrier device (sample holder) completely shown in Fig. 1 d is the mounting base in form of ground plate 2 (Fig. 1 a, b). It is produced out of a single peace of oxygen free high conductivity (OFHC) copper. Six parallel ordered boreholes 4, 6 (Fig. 1a, b) are shaped step like to house electrically insulating ceramic sleeves or barrels 8 defining mounting holes (Fig. 1b; barrel shown not according to scale). Boreholes 4 are located at the corners of a rectangle. Boreholes 6 are located within this rectangle and offset towards its center. The barrels consist of sintered Al₂O₃, delivered from Haldenwanger GmbH (Germany). The further assembly of the sample holder is to be fixed with screws (V2A stainless steel, not shown) passed through these insulator barrels. The boreholes 4, 6 and the barrels 8 are formed in such a way that the nuts and screws fixing the whole setup are countersunk in the bottom side of the ground plate 2. Because of the insulator barrels, the nuts and the screws have no contact to the ground plate 2. To ensure good cooling properties the complete bottom side of the ground plate 2 can be contacted with the cold face 10 of the docking station (Fig. 2a - c). Two vertical boreholes 12 in the ground plate 2 are intended as wire feed through from the front end to the back end (Fig. 1b). At the front end a trapeze like extension 14 functions as a coupling element (receptacle) for a transfer mechanism (Fig. 1b). Depending on the transfer system the coupling element can be changed to user requirements. Three tapped holes 16 (Fig. 1 b) are manufactured at the back end of the ground plate which allow a contact ledge 18 (Fig. 1c,d) to be fastened to the ground plate 2 via screws (not shown). The contact ledge 18 (Fig. 1 c) consists of machinable glass ceramic (Macor®) and shows a rib-like design. Six contact lugs (not shown) are embedded between the ribs and fixed to the contact ledge 18 via screws. The contact lugs ensure friction contact to counter lugs (not shown) of a contact ledge receptacle 19 (Fig. 2b) which is fastened to the docking station. The rib-like design of the contact ledge 18 ensures that the contact lugs will not be displaced and therefore guarantees electrical insulation not only between the lugs and the ground plate 2 but also between the lugs themselves. The complete electrical supply for the sample holder is provided via the contact lugs. An example for a typical allocation of the lugs could be like two for a thermocouple, two for a heating filament and one for the grounding of the sample. Two sapphire blocks 20 (Korth Kristalle GmbH, Am Jägersberg 3, 24161 Kiel, Germany) are mounted on top of the ground plate (Fig.1 c) in such a way, that their boreholes (not shown) for the mounting screws are above and aligned with the barrels 8 of the ground plate (Fig. 1b, bore holes 4). The sapphire blocks 20 serve several purposes. They electrically insulate the sample from the ground plate and spatially separate the sample from the ground plate 2 so that there is enough space for a heating filament 22 (Fig. 1c, d). Furthermore they provide good sample cooling and prevent the ground plate 2 from getting too hot from heating. The sapphire blocks 20 are manufactured with two additional (transverse) boreholes allowing wires 24 from the contact ledge to be passed through to connect e.g. the heating filament 22 (see Fig. 1c).

The heating filament 22 (Fig. 1c) is placed between the two sapphire blocks 20 and is fixed by two screws 26 (Fig. 1c). The screws themselves 26 are passed thread first through the mounting holes from the bottom side of the ground plate 2 (see Fig. 1b). Again, the barrels 8 in the boreholes guarantee electrical isolation. Nuts on top of the ground plate fix the screws 26 (Fig.1 c). To avoid electrical contact of the nuts with the ground plate a ceramic insulating plate 28 is put in between. The dimensions of the insulating plate (see Fig. 1c) are chosen in such a way that the whole area between the two sapphire blocks 20 is covered. This further insures that electrons being ejected from the heating filament 22 in case of electron bombardment heating will not be accelerated towards the ground plate 2. On the other hand a hole drilled into the sample plate 30 (not shown) makes sure that the sample backside is free to access for accelerated electrons of the filament and the electrons are therefore mostly attracted by the sample.

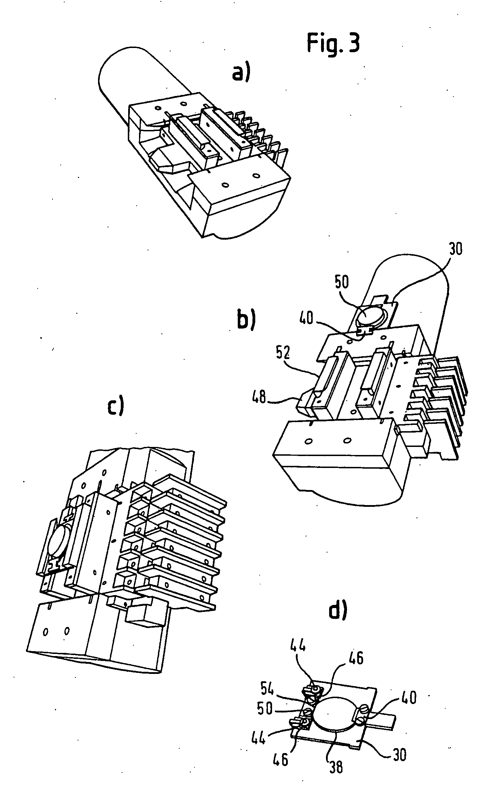

A contact plate 32 made of OFHC copper with a strap 34 (see Fig. 1 c) is placed on each sapphire block 20 and functions as a direct electrical contact to the sample. Wires 24 from the contact ledge 18 can easily be fixed to the straps 34 and thus provide opportunities for grounding or direct electrical heating. Finally, two runners 36, made of molybdenum, are positioned on top of the contact plates 32 (Fig. 1d). The runners 36 are specially shaped so they can act as a take-up for the mobile sample plate 30 (see Fig. 3b), consisting of tantalum, which can simply be slid into the runners. The sample 38 itself is clamped to the sample plate via tantalum stripes 40 (Fig. 3b).

As mentioned before, the whole superstructure, namely runners 36, contact plates 32 and sapphire blocks 20 are fastened to the ground plate 2 via screws which are passed through the mounting holes of the barrels (sleeves) 8 inserted into boreholes 4 (Fig. 1b). The screws are then fixed with nuts. The heads of the screws and the nuts are countersunk into the runners 36 and the bottom side of the ground plate 2, respectively.

The sample holder together with or without sample plate 30 is then pushed into a sample holder docking station (see Fig. 2b, c), which consists of OFHC copper. The docking station is fastened to a cooling reservoir or cryostat. An easy introduction of the sample holder is ensured via specially shaped runners 42 (Fig. 2b). A tight fit of the sample holder in the docking station is warranted by the usage of leaf springs fixed to the runners (not shown). To avoid oxidation of the copper pieces like docking station and ground plate, these parts have been gilded via electro-plating (E. Nerreter GmbH, Borkumstr. 6, 28217 Bremen, Germany).

The temperature can be measured with a thermocouple (e. g. of type K) which is spot welded to the edge of the sample. Slide contacts 44 for the thermocouple wires may be fixed to the mobile sample plate 30 (see Fig. 3d) and molybdenum runners 36 (see Fig. 1d). Electric insulation of these slide contacts 44 is provided by small insulator shims 46 placed between the screws used for fixing the thermocouple lugs and the thermocouple lugs themselves. To ensure that the movement of the sample plate 30 into and out of the runners 36 is not hindered the screw heads are countersunk in the back side of the sample plate 30.

This special thermocouple connection ensures that the temperature of the sample plate 30 can be measured without losing its mobility (see Fig. 3d). Other locations for fixing the thermocouple are of course available. A rather simple opportunity is to place the thermocouple in a hole drilled through the side of one of the molybdenum runners 36. The thermocouple tip, reaching through the borehole, gets in contact with the sample plate but not with the sample itself. This setup was tested in the process of the sample holder development by comparing the measuring results to the results delivered by a thermocouple which was spot welded directly on top of the sample. For temperatures where the sample's temperature is in equilibrium with the temperature of the docking station (100K at cooling and 273K without cooling) this setup works quite well (see table 1). The disadvantage of this setup, namely measuring the temperature far away from the sample is offset by the simpler setup in contrast to the more sophisticated advanced sample plate modification with its mounted contact lugs (Fig. 3b).

The key feature of the carrier device (sample holder) is its simple design and modular setup. Due to this concept the sample holder can easily be modified to fulfill individual needs and is therefore highly flexible and versatile applicable. Its main features, attributed to the modular concept, are as follows.

It is compatible even to commercially available sample holder systems. For example an OMICRON sample plate can be adopted by using differently shaped runners on the sapphire blocks. Different sample sizes can be used. Merely the runners and the sample plate have to be altered to fit the new sample size. The limiting factor is a reasonable size of the sample with regard to the general stability of the setup and to the length of the heating filament to ensure a constant heat distribution over the sample. The maximum sample diameter should favorably not exceed 20mm. Another feature of this sample holder is its variable heating and cooling properties. The exemplary setup presented above is tuned to maximum cooling conditions but with the possibility of heating via a filament still given. The sample plate is fixed as close as possible to the sapphire blocks. If more heating power is needed the sample plate can be lifted by using shims between the sapphire blocks and the contact plates. An increase in the distance between the sample and the sapphire blocks results in decreased cooling properties. Furthermore, different heating options are available. The design properties of the insulated setup provides the possibility of direct sample heating, as it is needed for semiconductors. Instead of connecting the wires to the heating filament they are then fixed to the lashes of the contact plates. Even combined heating with direct heating and filament heating can be realized. It has to be taken into account, though, that a specially insulated sample plate should then be used. Furthermore, e.g. a semi-conductor or an insulating sample can be heated indirectly. In this case the sample is preferably fixed to a special sample plate without a central hole. The sample plate is then heated via electron bombardment and due to thermal conduction the sample is heated as well. Another advantage of the sample holder system is its mobility without the loss of its heating, cooling and temperature control features. A transfer system can be used to move the sample holder to different docking stations in the UHV chamber. Due to the same wiring of the contact ledges of the different docking stations the sample holder can be supplied with electricity as well as thermocouple connection at every single station. Furthermore, the sample plate with the sample being attached to it, is mobile in itself. This allows the sample to be separately taken out of the sample holder and transferred to a device where only little space is present, like in the case of some STMs. With respect to other spectroscopic methods (XPS, UPS, LEED, IR,...), the sample surface, being slightly elevated in comparison to all other parts of the sample holder, is freely accessible for all kinds of beams even at grazing angles.

As stated before, a great advantage of this sample holder system lies in its modular, simple setup and the simple design. Redesign and individual changes of its components can be carried out easily. Therefore, special experimental requirements that are not mentioned above can be met, too.

### Examples:

To specify the physical properties of the sample holder system several experiments with partially modified sample holder setups were carried out. During the experiments up to two additional thermocouples were used to measure the temperatures at different points of the sample holder in order to measure the temperature distribution over the whole sample setup. One thermocouple was spot-welded to the top of the ground plate near the trapeze-like take-up for the transfer mechanism (see Fig. 3b, contact point 48), the second one was spot-welded onto the center of the top side of the sample (Fig. 3b, contact point 50).

The third thermocouple, which is normally used as the standard temperature measuring unit of the sample holder, was always employed (Fig. 3b, contact points 52 or 54, depending on the sample plate used). The position of the third thermocouple, as well as the distance between the sample and the ground plate varied with the experiment (see respective experimental setup for details). A tantalum plate with a thickness of 0.5mm and 10mm in diameter functioned as a substitute for the sample. The power of the filament, the heating rate and the temperature were controlled via a regulated power supply (BESTEC GmbH, Berlin, Germany) which included a temperature control unit (EUROTHERM 2408). Liquid nitrogen was used for cooling.

### Example 1:

In the first experimental setup the simple sample plate without direct thermocouple connection of the third thermocouple to the sample was tested. A heating filament was used as a source for resistance and electron bombardment heating (tungsten wire, 0.25mm in diameter). The runners and the contact plates were directly mounted on the sapphire blocks which in themselves were in direct contact with the ground plate. This setup is therefore optimized for good cooling but with the heating option still available. The distance between the sample backside and the ground plate was 8mm (distance between sample backside and sapphire blocks was 2 mm). The designated position for the third thermocouple, in case of employing the simple sample plate, is a hole drilled into one of the molybdenum runners (Fig. 3b, contact point 52). For resistance heating, a maximum current of 4.12A at 8.8V was used and for electron bombardment heating an additional negative high voltage of up to 750V was put on the filament. For calibration purposes a thermocouple (type K), connected to the EUROTHERM 2048, was held directly into liquid nitrogen and a temperature of 83K was displayed. Table 1 shows the results for the final temperatures for cooling and heating as well as the cooling time under the conditions described before.

### Example 2:

In the second experimental setup a more sophisticated sample plate with integrated direct thermocouple connection to the sample was tested. A heating filament was used as a source for resistance and electron bombardment heating (tungsten wire, 0.25mm in diameter). The runners and the contact plates were directly mounted on the sapphire blocks which in themselves were in direct contact with the ground plate. This setup is therefore optimized for good cooling but with the option for heating still available. The distance between the sample backside and the ground plate was 8mm (distance between sample backside and sapphire blocks was 2 mm). The third thermocouple was spot welded to contact point 54 at the edge of the sample (Fig. 3d). For resistance heating, a maximum current of 4.3A at 9.7V was used and for electron bombardment heating an additional negative high voltage of up to 576V (70mA) was put on the filament (4,1A and 8.4V). The resulting temperature of 1298K could be easily increased by increasing the high voltage. The experimental procedures consisted of cooling the sample with liquid nitrogen and subsequent heating to 274K (2a) and 783K (2b), respectively. Upon reaching the chosen temperatures the sample was cooled again and the cooling times were measured. After reaching the final cooling temperature the sample was heated via resistance heating and, in case of 2b, also via electron bombardment heating. Tables 2a and 2b show the results for the final temperatures for cooling and heating as well as the cooling time after heating to 274K (table 2a) and 783K (table 2b) under the conditions described before.

### Example 3:

The third experimental setup was tuned towards improved heating properties. Spacers, made of ALSINT (Haldenwanger GMBH), were placed between the runners and the contact plates to increase the distance between the sample and the sapphire blocks by 1mm. The setup of the filament and its power as well as the thermocouple connections were the same as in the example 2 (see above). Table 3 shows the results for the final temperatures for cooling and heating as well as the cooling time under the conditions described before.

The increase in cooling time can be related to the increased distance between the sample and the ground plate.

### Example 4:

In the fourth experimental setup a semi-conductor (silicon sample) was fixed to a slightly modified version of the more sophisticated sample plate with integrated direct thermocouple connection to the sample. In contrast to the usually employed sample plate the one used in this experimental setup was manufactured without a central hole. Therefore the heating of the sample occurred indirectly via thermal conduction from the heated sample plate to the silicon sample. A heating filament was used as a source for resistance and electron bombardment heating (tungsten wire, 0.25mm in diameter) of the sample plate. The runners and the contact plates were directly mounted on the sapphire blocks which in themselves were in direct contact with the ground plate. The distance between the sample backside and the ground plate was 8mm (distance between sample backside and sapphire blocks was 2 mm). The third thermocouple was spot welded to contact point 54 at the edge of the sample (Fig. 3d). For resistance heating, a maximum current of 4.3 at 13.7V was used and for electron bombardment heating an additional negative high voltage of up to 380V (92mA) was put on the filament (4.0A and 12.3V). The experimental procedure involved cooling the sample holder with liquid nitrogen, followed by heating of the sample plate by electron bombardment. After reaching a temperature of about 1600K, measured at contact point 54 (Fig 3d), the temperature control unit dropped out due to the measuring range limitation of the type K thermocouple.

### Summary of examples:

The new sample holder system comprising carrier device and sample holding element is easy to handle and possesses an advantageous variability with respect to different samples. After exposing the sample holder to extreme thermal stress for a long period of time the transfer characteristics, including the easy slipping of the ground plate in the seat of the docking station as well as the conductivity of the wire connections at the contact ledges proved constantly stable. Different sample plates of different sizes can be attached to the sample holder. Furthermore, different heating options with variable cooling and heating rates can be employed. The results obtained for different sample set ups show that by changing the set up the requirements of a particular experiment can be satisfied.

**Table 1.**

| | | | |
|---|---|---|---|
| Cooling and heating properties of the sample holder system (Fig. 3c) using the simple sample plate without contact lugs for thermocouple connections (Fig. 3b, 3c). The setup is tuned to best cooling while heating options are still available. Listed are the final temperatures, measured at different points, for filament and electron bombardment heating as well as for cooling with liquid nitrogen. Furthermore the cooling time is also specified. The experimental procedure involved cooling down from 294K with liquid nitrogen (table 1), followed by subsequent heating (table 1). The locations of the contact points used for the temperature measurements are shown in Fig. 3b. | | | |

| Procedure: Cooling down the sample holder from room temperature | Temperature (contact point 1) [K] | Temperature (contact point 2) [K] | Temperature (contact point 3) [K] |
|---|---|---|---|
| Cooling (liquid nitrogen) after 0 min | | 294 | 294 |
| Cooling (IN₂) after 5min | | 192 | 196 |
| Cooling (IN₂) after 10min | | 109 | 125 |
| Cooling (IN₂) after 20min | | 98 | 109 |
| Final cooling temperature | 89 | 97 | 109 |
| Heating (filament only) | | | 622 |
| Heating (electron bombardment) | | | 1023 |

**Table 2a.**

| | |
|---|---|
| Cooling and heating properties of the sample holder system (Fig. 3c) employing the more sophisticated sample plate which includes contact lugs for thermocouple connections (Fig. 3d). The setup is tuned to best cooling while heating options are still available. Listed are the final temperatures for filament heating as well as for cooling with liquid nitrogen. Furthermore the cooling time is also specified. The experimental procedure involved heating the cooled (liquid nitrogen) sample holder to 274K, followed by subsequent cooling (table 2a) and reheating (table 2a). The location of the contact point used for the temperature measurement is shown in Fig. 3b. | |

| Procedure: After heating the cooled sample holder to 274K | Temperature (contact point 4) [K] |
|---|---|
| Cooling (liquid nitrogen) after 0 min | 274 |
| Cooling (IN₂) after 5min | 163 |
| Cooling (IN₂) after 10min | 128 |
| Cooling (IN₂) after 20min | 106 |
| Final cooling temperature | 106 |
| Heating (filament only) | 783 |

**Table 2b.**

| | |
|---|---|
| Cooling and heating properties of the sample holder system (Fig. 3c) employing the more sophisticated sample plate which includes contact lugs for thermocouple connections (Fig. 3d). The setup is tuned to best cooling while heating options are still available. Listed are the final temperatures for filament and electron bombardment heating as well as for cooling with liquid nitrogen. Furthermore the cooling time is also specified. The experimental procedure involved heating the cooled (liquid nitrogen) sample holder to 783K, followed by subsequent cooling (table 2b) and reheating (table 2b). The location of the contact point used for the temperature measurement is shown in Fig. 3b. | |

| Procedure: After heating the cooled sample holder to 783K | Temperature (contact point 4) [K] |
|---|---|
| Cooling (liquid nitrogen) after 0 min | 783 |
| Cooling (IN₂) after 5min | 402 |
| Cooling (IN₂) after 10min | 179 |
| Cooling (IN₂) after 15min | 138 |
| Cooling (IN₂) after 20min | 120 |
| Cooling (IN₂) after 25min | 113 |
| Final cooling temperature after 35 min | 106 |
| Heating (filament only) | 783 |
| Heating (electron bombardment) | 1298 |

**Table 3.**

| | | | |
|---|---|---|---|
| Cooling and heating properties of the sample holder system (Fig. 3c) employing the more sophisticated sample plate which includes contact lugs for thermocouple connections (Fig. 3d). Spacers were placed between the runners and the sample plates, thus increasing the heating properties at the cost of reduced cooling properties. Listed are the final temperatures, measured at different points, for filament and electron bombardment heating as well as for cooling with liquid nitrogen. Furthermore the cooling time is also specified. The experimental procedure involved heating the cooled (liquid nitrogen) sample holder to 698K, followed by subsequent cooling (table 3) and reheating (table 3). The locations of the contact points used for the temperature measurements are shown in Fig. 3b. | | | |

| Procedure: After heating the cooled sample holder to 698K | Temperature (contact point 1) [K] | Temperature (contact point 2) [K] | Temperature (contact point 4) [K] |
|---|---|---|---|
| Cooling (liquid nitrogen) after 0 min | | 781 | 690 |
| Cooling (IN₂) after 5min | | 356 | 314 |
| Cooling (IN₂) after 10min | | 217 | 196 |
| Cooling (IN₂) after 15min | | 154 | 171 |
| Cooling (IN₂) after 20min | | 150 | 134 |
| Cooling (IN₂) after 25min | | 139 | 124 |
| Final cooling temperature after 60min | 106 | 127 | 113 |
| Heating (filament only) | | | >790 |
| Heating (electron bombardment) | | | >1298 |

## Claims

1. Carrier device for use under UHV conditions and for carrying a sample or a sample holding element, the device comprising
- a mounting base with a number of mounting holes, the holes being electrically insulated against each other, such that electrically conducting mounting elements when inserted into the holes are not in electric contact with each other via the mounting base, and
- one or more sapphire spacers for conducting heat from a sample to a cooling element, and being attached to the mounting base.

2. Carrier device according to claim 1, wherein the mounting holes are arranged in a regular array.

3. Carrier device according to any preceding claim, further comprising one or more fastening elements for removably fastening a sample holding element to the carrier device, the fastening element(s) being directly or indirectly attached to the sapphire spacer(s) opposite the mounting base.

4. Carrier device according to any preceding claim, further comprising a heating element for heating a sample mounted on the carrier device.

5. Carrier device according to any preceding claim, further comprising a number of mounting elements extending through a corresponding number of said mounting holes in the mounting base and mounting to the mounting base at least one of said sapphire spacers and/or at least one heating element and/or at least one other element of the carrier device.

6. Carrier device according to any preceding claim, further comprising a contact ledge having a series of separate electric contact elements for contacting external electric conductors.

7. Carrier device according to the preceding claim, wherein one or more of the the contact elements are electrically connected to electric lines arranged to provide electric contact to the sample and/or a sample holding element and/or a heating element when the respective element/s is/are attached to the carrier device.

8. Carrier device according to any preceding claim, further comprising a first coupling element distant from the mounting holes, for coupling with a corresponding second coupling element of a transfer mechanism.

9. Carrier device according to any preceding claim, wherein the mounting base is of an electrically conducting material and has embedded therein electrically insulating sleeves providing mounting holes which are electrically insulated against each other.

10. Modular sample holder system for use under UHV conditions, comprising
- a carrier device according to any of the preceding claims
- a sample holding element adapted to (a) hold a sample to be prepared and/or analysed under UHV conditions and (b) be fastened to the carrier device.

11. Assembled modular sample holder system for use under UHV conditions, comprising:
- a carrier device according to any of claims 1-9 and
- a sample holding element adapted to hold a sample to be prepared and/or analysed under UHV conditions,
wherein the sample holding element is fastened to the carrier device.

12. Use of a carrier device according to any of claims 1-9or a modular sample holder system according to claim 10 or an assembled modular sample holder system according to claim 11 in a method for preparation and/or analysis of a sample under UHV conditions.

13. Method for preparation and/or analysis of a sample under UHV conditions, comprising the steps of:
- providing a modular sample holder system according to claim 10,
- providing a sample to be prepared and/or analysed under UHV conditions,
- assembling sample and modular sample holder system so that the sample holding element (a) holds the sample to be prepared and/or analysed and (b) is fastened by the fastening element(s) of the carrier device,
- preparing and/or analysing the sample under UHV conditions.
